# EUROPEAN PATENT SPECIFICATION

(11) **EP 1 888 704 B1**
(45) Date of publication and mention of the grant of the patent: **11.01.2012**
(21) Application number: 06742946.4
(22) Date of filing: 15.05.2006
(51) Int. Cl.: C09K 3/18, E01H 10/00

(54) **ANTIFREEZE MATERIAL FOR OUTDOOR SITES, TYPICALLY ROADS**
GEFRIERSCHUTZMITTEL FÜR AUSSENANWENDUNGEN, TYPISCHERWEISE STRASSEN
MATERIAU ANTIGEL POUR UNE UTILISATION EN EXTERIEURS, GENERALEMENT SUR ROUTES

(30) Priority: 30.05.2005 IT RE20050062
(43) Date of publication of application: 20.02.2008
(73) Proprietor: Leo, Claudia, I-02010 Castel Sant'Angelo (IT)
(72) Inventor: PARISI, Ciro, I-57022 Donoratico Castagneto Carducci (IT)
(74) Representative: Gervasi, Gemma
(86) International application number: PCT/EP2006/004630
(87) International publication number: WO 2006/128582

(56) References cited:
- EP-A- 0 301 337
- EP-A- 1 352 941
- WO-A-97/01612
- WO-A-02/057388
- DE-A1- 1 534 176
- DE-A1- 3 315 159
- US-A- 4 243 415
- US-A- 4 671 208

## Description

### TECHNICAL FIELD

The present invention relates, in a totally general sense, to the generally antifreezing and/or anti-skid surface treatment of outdoor constructions, such as roads, paths, squares, courtyards and the like, and more particularly to a material for effecting such a treatment.

The invention also relates to a method for preparing said antifreeze and/or antiskid material.

### PRIOR ART

The problems resulting from bad weather typical of generally winter periods, such as snowfalls, ice and hailstones are well known, the particularly important effects of which include for example difficult travel both on foot and by vehicle, with its accompanying dangers.

For simplicity, the effect of a snowfall will be considered as typical of all these cases.

Apart from the intervention of suitable snowploughs, obviously required when fairly deep snow layers are present, in accordance with the known art for combating the snow (and/or ice) present typically on roads and motorways, saline products such as rock salt are used, the obvious purpose of which is to lower the freezing point of water.

Sometimes a small quantity of crushed or uncrushed river or quarry gravel is added to said salt.

If a snowfall is predicted, said salt (with or without gravel) is distributed directly over the road surface by a suitable salt spreader, whereas if the snowfall is in progress or has ceased, the salt is spread over the road after removal (generally incomplete) of the snow (and/or ice) present thereon by a snowplough which carries said salt spreader on board or is followed thereby.

The limits connected with the use of said salt, either as such or mixed with gravel, include a fairly short life of its antifreeze effect. This is because the salt is directly exposed overall to the environment, in particular to being washed away after periods of bad weather, particularly in the presence of rain and/or sudden temperature increases. In this respect, in the said case of prior spreading of salt when a snowfall is predicted, if the snowfall does not take place and instead it rains, the salt dissolves rapidly and is discharged from the road surface together with the rain water.

If instead it actually snows, then the salt performs its antifreeze function (substantially as if spread after a snowfall), to at least partly dissolve the surrounding snow and prevent ice formation (within the limits imposed by the external temperature and local salt concentration). When it ceases to snow and the ambient temperature rises, the snow melts and the water which forms washes away the salt, this process being more rapid the heavier and faster the traffic transiting the site in question, particularly in combination with an ambient temperature increase and/or if rain is present.

EP0301337 discloses a composition based on the use of an inert porous material which can be natural, artificial or synthetic, granular in form, and weighing less than 1 kg/dm3 in bulk. The porous granules, e.g. of expanded clay or similar, are partially saturated to the extent of 20 - 30% of their weight, with active ingredients which lower the freezing point of water. The melting additives can be added in the pure state or diluted in water, and there is provision for the addition of about 2% by weight of the melting additive, of anti-acid limiters. The melting additive can be sodium chloride in solution or glycols.

The main object of the present invention is to overcome the limitations of the initially described salt spreading method.

### DISCLOSURE OF THE INVENTION

Said object is attained by a generally antifreeze material and its method of production presenting the characteristics indicated in the main claims. Preferred and advantageous formulations thereof are indicated in the dependent claims.

In a totally general sense, to achieve said objective, a material is provided which incorporates, or contains, a generally antifreezing product comprising a brine solution of saturated sodium chloride, such as sea salt, and an evaporable alcoholic substance, arranged to release the antifreezing product in a relatively slow manner, even in the presence of a high degree of wetness, such as a layer of water due to rain or melting snow.

The objective of the invention is hence achieved, in that the aforesaid characteristic, i.e. said slow release of the antifreezing product, enables the material of the invention to be less sensitive to said wash-away phenomenon, and hence achieve an antifreeze effect which for equal conditions is more prolonged than that of rock salt directly spread over the ground, as already stated.

The basic material of the invention is a loose material of generally granular form and generally porous structure which does not degrade in the presence of water.

Said loose material may or may not withstand the compressive action due either to treading or to tyre rolling thereon, in the sense that it does not immediately completely disaggregate when subjected to such action. Said porous structure acts as a receptacle for a generally antifreezing product, such as generally wet sea salt, for which the loose material acts as the carrier or release vehicle.

The porous structure is preferably of the intercommunicating cell or pore type (similar to a sponge), said cells or pores being relatively small in relation to the size of the particles of loose material.

Said particles, or grains, can be of generally round or spherical shape, with an average size for example of about 5 mm, their cells or pores having micrometric dimensions, of the order for example of 15-25 Å, and are distributed substantially uniformly within the bulk of the respective particles or grains.

Characteristics or properties of this type can for example be found in natural argillaceous minerals of the sepiolite-paligorskite family. In particular, sepiolite is a magnesium hydrate silicate the structure of which presents parallel chains of needle-shaped crystals alternating with free channels arranged along the crystalline fibres or chains.

Because of this, it is able to absorb a large quantity of water (even 100% and more of its own weight) without swelling or altering in any way. It is of very low cost and does not pollute, being a natural material.

Such characteristics are present in an argillaceous material such as attapulgite, which is hence suitable for use within the context of the invention. Tests carried out have shown that natural calcium-based minerals and preparations for domestic use are also suitable, for example those used as granular litter for domestic animals.

Essentially, what is important is that the loose material acting as the vehicle for the antifreezing saline product does not become immediately crushed or disaggregated by said treading or tyre rolling action, has a porous structure with generally communicating cells, and can be impregnated with a wet antifreezing product.

A convenient component for the antifreezing product for the purposes of the invention is common salt - sodium chloride - not necessarily refined, i.e. natural.

### BEST MODE FOR CARRYING OUT THE INVENTION

A material not according to the invention having a preferred formulation was prepared by the following procedure.

A quantity of water was fed into a container, such as a tank, and sea salt was gradually added until the water was virtually completely saturated therewith (indicated by monitoring with a suitable hydrometer or other similar apparatus).

To accelerate the process the liquid was continuously stirred. In comparative tests, the liquid was not only stirred but also heated (generally to below the boiling point of water), this achieving better results in terms both of the time needed to obtain the required solution and the increase of solute salt concentration in the dissolving water.

After obtaining the brine solution (water + salt), a suitable quantity of generally granular inert material was immersed in it (in the case of sepiolite this quantity being virtually equal to the weight of the solution). The mixture was stirred while maintaining the bath heated, until the inert material (such as sepiolite) was virtually completely impregnated.

The impregnated inert material, if necessary drained and left to at least partially cool, was then packaged in suitable sealed containers, such as barrels, drums, buckets with a snap-on lid, or thermowelded synthetic bags.

This antifreeze material was used on snow-covered roads, paths, squares and courtyards, by distribution in the same manner as the usual rock salt under comparable climatic conditions, it being found that it produced substantially the same results as the said salt, the effects however lasting for a much longer time, equal to about three times that of said rock salt. This was because the material continued to release salt even after being washed repeatedly with appropriate water jets.

Tests were then carried out aimed at improving the retention time of the material of the invention on surfaces, typically road surfaces, used by vehicle traffic, which is known to give rise to rapid displacement of loose material present on the road towards the centre and sides of the road. These tests showed that the material offers good resistance to displacement by the rolling of tyres if the material has fairly sharp edges, and still better if flat in shape, similar to flakes or scales.

If the material is of round granular shape, its structure may not be particularly resistant, in the sense that it may fracture, but without complete disaggregation, under the effect of treading or tyre rolling.

The improvements to the antifreeze material of the invention, in particular regarding prolongation of the time required to release all the contained salt, are achieved by adding a suitable retardant preparation to the salt/water solution as an evaporable alcoholic substance. Specifically, after preparing said brine solution, but before adding the inert material to it, the solution was cooled to about ambient temperature, after which a certain quantity of said preparation was added to it.

Good results were achieved by using an economical non-pollutant substance, such as ethyl alcohol of about 95% purity, added to the solution in a quantity of about 5% of the solution weight.

When used on snow-covered roads as in the previous case, the antifreeze material containing alcohol had a salt release time practically double that found for the material without alcohol.

This is because when used under said conditions, i.e. in low temperature, the ethyl alcohol evaporates fairly slowly with the result of immediately providing a type of filtering barrier towards salt dilution by the moisture present on the site on which the loose material is used.

Said material containing a retardant preparation such as ethyl alcohol also falls within the scope of protection of the invention.

An example of a material formulation comprising said retardant preparation according to the invention is the following.

To prepare 20 kg of antifreeze material of the invention, the following weight quantities of the respective components were used: about 5 kg of mains water, about 2 kg of natural sea salt, about 12 kg of domestic animal litter, about 1 kg of ethyl alcohol.

## Claims

1. An antifreeze material typically for outdoor constructions, such as roads and the like, comprising a loose material of generally granular form having particles of porous structure having mutually communicating cells or pores, which does not degrade in the presence of water and does not immediately completely disaggregate when subjected to compressive action and which is impregnated by a water- soluble antifreezing product comprising a brine solution of saturated sodium chloride and an evaporable alcoholic substance, wherein the evaporable alcoholic substance is present in a quantity comparatively much less than said brine solution able to retard the extraction of said brine solution from said loose material particle cells by the environmental moisture present on the site on which the material is used.

2. A material as claimed in claim 1, wherein said alcoholic substance is ethyl alcohol of about 95% purity, present in a quantity of about 5% by weight of the brine solution or of the total antifreeze material weight.

3. A material according to claims 1or 2, wherein the dimension of said cell or pores are within a range of 15-25 Å.

4. A material as claimed in claims 1 to 3, wherein the constituent particles of said loose material are of flat shape of flake or similar type.

5. A material as claimed in claims 1 to 4, wherein that said porous particles consist of a natural argillaceous material.

6. A material as claimed in claim 5, wherein that said argillaceous material is sepiolite or attapulgite.

7. A method of production of an antifreeze material according to claim 1, comprising:
• Providing a loose material of granular form having particles of porous structure having mutually communicating cells or pores which does not degrade in the presence of water and does not immediately completely disaggregate when subjected to compressive action,
• Impregnating said loose material at a temperature which is up to the water boiling point with a saturated brine solution containing an evaporable alcoholic substance, wherein the evaporable alcoholic substance is present in a quantity comparatively much less than said brine solution able to retard the extraction of said brine solution from said loose material particle cells by the environmental moisture present on the site on which the material is used.

8. The method according to claim 7, wherein the impregnated inert material is drained.

9. The method of production of an antifreeze material according to claims 7 or 8, wherein said alcoholic substance is ethyl alcohol of about 95% purity, present in a quantity of about 5% by weight of the brine solution or of the total antifreeze material weight.

10. The method of production of an antifreeze material according to claims 7 to 9, wherein the dimension of said cell or pores are within a range of 15-25 Å.

11. The method of production of an antifreeze material according to claim 7, wherein the constituent particles of said loose material are of flat shape of flake or similar type, preferably said porous particles consist of a natural argillaceous material.

12. The method according to claim 11, wherein said argillaceous material is sepiolite or attapulgite.

## Patentansprüche

1. Gefrierschutzmaterial, welches für Außenanwendungen wie beispielsweise Straßen und dergl, typisch ist, welches ein Schüttgut in einer im Allgemeinen körnigen Form mit Teilchen umfasst, die eine poröse Struktur und untereinander in Verbindung stehende Zellen oder Poren aufweisen, welches sich in Gegenwart von Wasser nicht zersetzt und nicht sofort völlig zerfällt, wenn es Druckwirkung ausgesetzt wird und welches mit einem wasserlöslichen Gefrierschutzmittel getränkt ist, das eine Lake aus gesättigtem Natriumchlorid und einer verdampfbaren alkoholischen Substanz umfasst, wobei diese verdampfbare alkoholische Substanz in einer Menge vorhanden ist, die verhältnismäßig viel geringer ist als die der genannten Lake und die imstande ist, die Extraktion der genannten Lake aus den genannten Zellen der Teilchen des Schüttgutes durch die Umgebungsfeuchtigkeit, die am Anwendungsort des Materials herrscht, zu verzögern.

2. Material nach Anspruch 1, bei welchem die genannte alkoholische Substanz Ethylalkohol mit einem Reinheitsgrad von etwa 95 % ist, welcher in einer Menge von ungefähr 5 Gew.-% der Lake oder des gesamten Gefrierschutzmaterials vorhanden ist.

3. Material nach Anspruch 1 oder 2, bei welchem die Abmessungen der genannten Zellen oder Poren in einem Bereich von 15 bis 25 Å liegen.

4. Material nach Anspruch 1 bis 3, bei welchem die Teilchen, aus denen das genannte Schüttgut besteht, von flacher Gestalt wie der einer Flocke oder eines ähnlichen Typs sind.

5. Material nach Anspruch 1 bis 4, bei welchem die genannten porösen Teilchen aus einem natürlichen tonigen Material bestehen.

6. Material nach Anspruch 5, bei welchem das genannte tonige Material Sepiolith (Meerschaum) oder Palygorskit (Attapulgit) ist.

7. Verfahren zur Herstellung eines Gefrierschutzmaterials nach Anspruch 1, welches umfasst:
• das Bereitstellen eines Schüttgutes in körniger Form mit Teilchen, die eine poröse Struktur und untereinander in Verbindung stehende Zellen oder Poren aufweisen, welches sich in Gegenwart von Wasser nicht zersetzt und nicht sofort vollständig zerfällt, wenn es Druckwirkung ausgesetzt wird;
• das Tränken des genannten Schüttgutes mit einer gesättigten Lake, welche eine verdampfbare alkoholische Substanz enthält, bei einer Temperatur bis zum Siedepunkt des Wassers, wobei diese verdampfbare alkoholische Substanz in einer Menge vorhanden ist, die verhältnismäßig viel geringer ist als die der genannten Lake und die imstande ist, die Extraktion der genannten Lake aus den genannten Zellen der Teilchen des Schüttgutes durch die Umgebungsfeuchtigkeit, die am Anwendungsort des Materials herrscht, zu verzögern.

8. Verfahren nach Anspruch 7, bei welchem das getränkte Inertmaterial einer Dränage unterzogen wird.

9. Verfahren zur Herstellung eines Gefrierschutzmaterials nach Anspruch 7 oder 8, bei welchem die genannte alkoholische Substanz Ethylalkohol mit einem Reinheitsgrad von etwa 95 % ist, der in einer Menge von etwa 5 Gew.-% der Lake oder des gesamten Gefrierschutzmaterials vorhanden ist.

10. Verfahren zur Herstellung eines Gefrierschutzmaterials nach den Ansprüchen 7 bis 9, bei welchem die Abmessungen der genannten Zellen oder Poren in einem Bereich von 15 bis 25 Å liegen.

11. Verfahren zur Herstellung eines Gefrierschutzmaterials nach Anspruch 7, bei welchem die Teilchen, aus denen das genannte Schüttgut besteht, von flacher Gestalt wie der einer Flocke oder eines ähnlichen Typs sind, wobei vorzugsweise die genannten porösen Teilchen aus einem natürlichen tonigen Material bestehen.

12. Verfahren nach Anspruch 11, bei welchem das genannte tonige Material Sepiolith (Meerschaum) oder Palygorskit (Attapulgit) ist.

## Revendications

1. Matériau antigel généralement pour constructions extérieures, comme des routes et similaires, comprenant un matériau en vrac de forme généralement granulaire ayant des particules de structure poreuse dotées de cellules ou pores qui communiquent réciproquement, qui ne se dégrade pas en présence d'eau et ne se désagrège pas totalement immédiatement, lorsqu'il est soumis à une action de compression et qui est imprégné d'un produit antigel soluble dans l'eau comprenant une solution de saumure de chlorure de sodium saturé et d'une substance alcoolisée évaporable, dans lequel la substance alcoolisée évaporable est présente dans une quantité comparativement bien inférieure à ladite solution de saumure, capable de retarder l'extraction de ladite solution de saumure desdites cellules de particules de matériau en vrac par l'humidité environnementale présente sur le site sur lequel le matériau est utilisé.

2. Matériau selon la revendication 1, dans lequel ladite substance alcoolisée est l'alcool éthylique d'environ 95 % de pureté, présent dans une quantité d'environ 5 % en poids de la solution de saumure ou du poids total du matériau antigel.

3. Matériau selon les revendications 1 ou 2, dans lequel la dimension de ladite cellule ou desdites pores est dans une gamme de 15-25 Å.

4. Matériau selon les revendications 1 à 3, dans lequel les particules constituantes dudit matériau en vrac ont la forme plate d'un flocon ou similaire.

5. Matériau selon les revendications 1 à 4, dans lequel lesdites particules poreuses sont constituées d'un matériau argileux naturel.

6. Matériau selon la revendication 5, dans lequel ledit matériau argileux est la sépiolite ou l'attapulgite.

7. Procédé de production d'un matériau antigel selon la revendication 1, comprenant :
- la fourniture d'un matériau en vrac de forme granulaire ayant des particules de structure poreuse dotées de cellules ou de pores qui communiquent réciproquement, qui ne se dégrade pas en présence d'eau et ne se désagrège pas totalement immédiatement lorsqu'il est soumis à une action de compression,
- l'imprégnation dudit matériau en vrac à une température qui peut atteindre la température d'ébullition de l'eau, avec une solution de saumure saturée contenant une substance alcoolisée évaporable, dans lequel la substance alcoolisée évaporable est présente dans une quantité comparativement bien inférieure à ladite solution de saumure, capable de retarder l'extraction de ladite solution de saumure desdites cellules de particule de matériau en vrac par l'humidité environnementale présente sur le site sur lequel le matériau est utilisé.

8. Procédé selon la revendication 7, dans lequel le matériau inerte imprégné est drainé.

9. Procédé de production d'un matériau antigel selon les revendications 7 ou 8, dans lequel ladite substance alcoolisée est l'alcool éthylique d'environ 95 % de pureté, présent dans une quantité d'environ 5 % en poids de la solution de saumure ou du poids de matériau antigel total.

10. Procédé de production d'un matériau antigel selon les revendications 7 à 9, dans lequel la dimension de ladite cellule ou desdites pores est dans une gamme de 15-25 Å.

11. Procédé de production d'un matériau antigel selon la revendication 7, dans lequel les particules qui constituent ledit matériau en vrac ont une forme plate de flocon ou de type similaire, de préférence lesdites particules poreuses sont constituées d'un matériau argileux naturel.

12. Procédé selon la revendication 11, dans lequel ledit matériau argileux est la sépiolite ou l'attapulgite.
